# EUROPEAN PATENT SPECIFICATION

(11) **EP 2 942 420 B1**
(45) Date of publication and mention of the grant of the patent: **22.02.2017**
(21) Application number: 15165276.5
(22) Date of filing: 27.04.2015
(51) Int. Cl.: C23C 4/12, C23C 4/02, B05B 13/02, B05B 15/04, F01D 25/28

(54) **TURBINE COMPONENT INTERNAL HEATING SYSTEMS AND COATING SYSTEMS**
INTERNE TURBINENKOMPONENTENHEIZSYSTEME UND BESCHICHTUNGSSYSTEME
SYSTÈMES DE CHAUFFAGE INTERNE D'UN COMPOSANT DE TURBINE ET SYSTÈMES DE REVÊTEMENT

(30) Priority: 29.04.2014 US 201414264190
(43) Date of publication of application: 11.11.2015
(73) Proprietor: General Electric Company, Schenectady, NY 12345 (US)
(72) Inventor: Levy, Lawrence Matthew, Greenville, SC South Carolina 29615 (US); Souther, Ronald Lee, Greenville, SC South Carolina 29615 (US)
(74) Representative: Pöpper, Evamaria

(56) References cited:
- EP-A1- 1 544 414
- US-A1- 2007 147 996
- US-A1- 2011 045 181
- US-B1- 6 451 416

## Description

### BACKGROUND OF THE INVENTION

The subject matter disclosed herein relates to turbine component internal heating systems and, more specifically, to turbine component internal heating systems for turbine component coating systems.

In gas turbine engines, such as aircraft engines for example, air is drawn into the front of the engine, compressed by a shaft-mounted rotary-type compressor, and mixed with fuel. The mixture is burned, and the hot exhaust gases are passed through a turbine mounted on a shaft. The flow of gas turns the turbine, which turns the shaft and drives the compressor and fan. The hot exhaust gases flow from the back of the engine, driving it and the aircraft forward.

During operation of gas turbine engines, the temperatures of combustion gases may exceed 3,000°F, considerably higher than the melting temperatures of the metal parts of the engine which are in contact with these gases. Operation of these engines at gas temperatures that are above the metal part melting temperatures is a well-established art, and can depend, for example on a variety of coatings, internal cooling systems or combinations thereof. The metal parts of these engines that are particularly subject to high temperatures, and thus require particular attention with respect to cooling, are the metal parts forming combustors and parts located aft of the combustor.

The metal temperatures can be maintained below melting levels by using passageways such as cooling holes incorporated into some engine components. Sometimes, additional coatings, such as thermal barrier coatings (TBCs), cold spray coatings, plasma coatings, or other suitable coatings, may also be applied to the component for a variety of applications. However, the microstructures of the coatings can depend on the temperature of the components and/or the surrounding atmosphere.

As a result, the properties of the coatings may depend on the temperature of the turbine component during and/or after the coating application. One possible method for influencing the temperature is coating in intervals to allow the component to change temperature between coating applications. However, such methods can increase cycle time by slowing down the overall coating process. Another possible method for influencing the temperature is preheating or precooling the component via ovens, torches, induction, fans, liquids or the like. However, these methods may heat unnecessary areas, may not control the temperature during the coating application, and may also slow down the overall coating process time.

Accordingly, alternative turbine component internal heating systems and turbine component coating systems would be welcome in the art.

### BRIEF DESCRIPTION OF THE INVENTION

In one embodiment, a turbine component internal heating system is disclosed. The turbine component internal heating system includes at least one turbine component support platform that supports a turbine component having one or more internal cavities by temporarily engaging at least a side wall of the turbine component. The turbine component internal heating system further includes at least one heat source that extends from the at least one turbine component support platform, wherein when the at least one turbine component support platform supports the turbine component, the at least one heat source is at least partially disposed within at least one of the one or more internal cavities such that it can heat the turbine component from the inside.

In another embodiment, a turbine component coating system is disclosed. The turbine component internal coating system includes a turbine component internal heating system that includes at least one turbine component support platform that supports a turbine component having one or more internal cavities by temporarily engaging at least a side wall of the turbine component; and, at least one heat source that extends from the at least one turbine component support platform, wherein when the at least one turbine component support platform supports the turbine component, the at least one heat source is at least partially disposed in at least one of the one or more internal cavities such that it can heat the turbine component from the inside. The turbine component coating system further includes a coater that coats a target surface of the turbine component with a coating while the turbine component is supported by the turbine component support platform.

In yet another embodiment, a method for coating a target surface of a turbine component comprising one or more internal cavities is disclosed. The method includes inserting at least one heat source into at least one of the one or more internal cavities, heating the target surface via the at least one heat source while it is inserted into the at least one of the one or more internal cavities; and, coating the target surface.

These and additional features provided by the embodiments discussed herein will be more fully understood in view of the following detailed description, in conjunction with the drawings.

### BRIEF DESCRIPTION OF THE DRAWINGS

The embodiments set forth in the drawings are illustrative and exemplary in nature and not intended to limit the inventions defined by the claims. The following detailed description of the illustrative embodiments can be understood when read in conjunction with the following drawings, where like structure is indicated with like reference numerals and in which:
FIG. 1 is a perspective view of a turbine component internal heating system according to one or more embodiments shown or described herein;
FIG. 2 is a perspective view of another turbine component internal heating system according to one or more embodiments shown or described herein;
FIG. 3 is a schematic illustration of a heat source from a turbine component internal heating system with respect to a turbine component according to one or more embodiments shown or described herein;
FIG. 4 is a schematic illustration of another heat source from a turbine component internal heating system with respect to a turbine component according to one or more embodiments shown or described herein;
FIG. 5 is a schematic illustration of another heat source from a turbine component internal heating system with respect to a turbine component according to one or more embodiments shown or described herein;
FIG. 6 is a perspective view of a turbine component coating system according to one or more embodiments shown or described herein; and
FIG. 7 is a method for coating a target surface of a turbine component according to one or more embodiments shown or described herein.

### DETAILED DESCRIPTION OF THE INVENTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

Turbine component internal heating systems and turbine component coating systems incorporating turbine component internal heating systems, can generally be utilized to heat at least a portion of a turbine component from one or more of its internal cavities before, during and/or after external coating applications. By at least partially heating the turbine component from one or more of its internal cavities, coating operations may avoid the need for ovens, torches, or other more excessive, costly or timely heat treatment cycles. Turbine component internal heating systems, turbine component coating systems incorporating turbine component internal heating systems, and methods for coating target surfaces of turbine components will be disclosed and discussed in more detail herein.

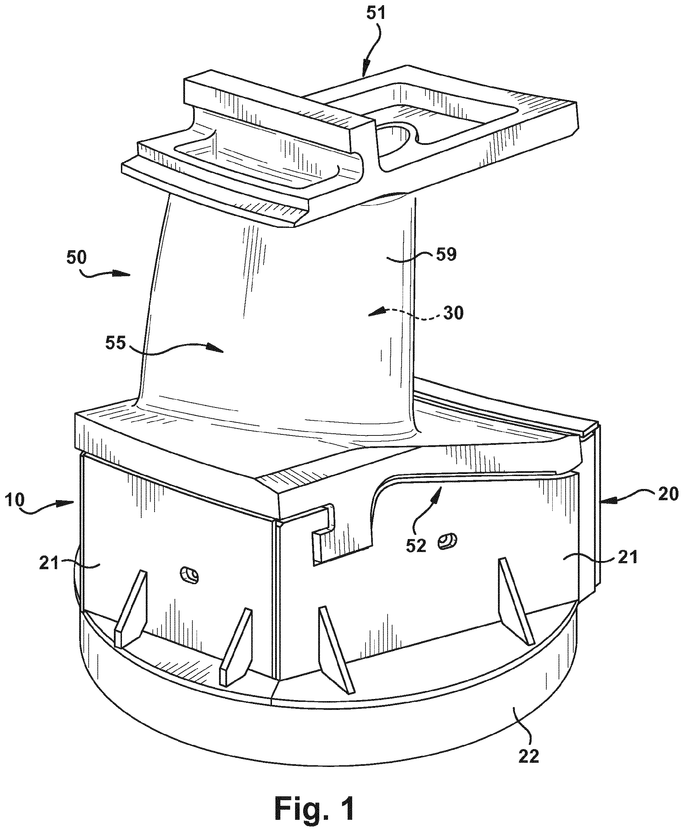

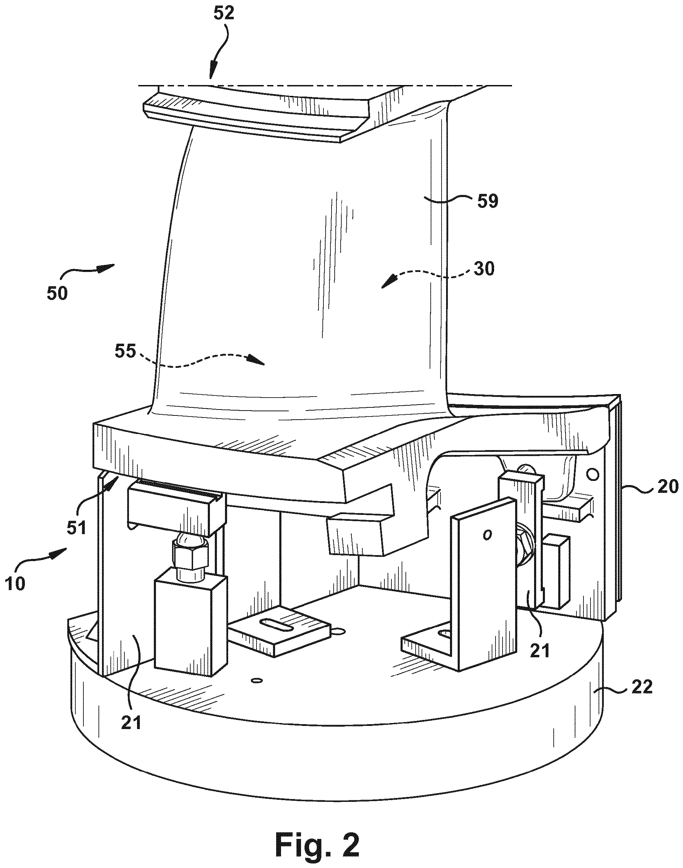

Referring now to FIGS. 1 and 2, turbine component internal heating systems 10 are disclosed for supporting a turbine component 50 for one or more coating applications. The turbine component 50 can comprise any turbine component that has one or more internal cavities 55 and has a target surface 59 (e.g., an external surface) that is to be coated with a coating 91. For example, in some particular embodiments, the turbine component 50 may comprise a nozzle or bucket. In some embodiments, the turbine component 50 may comprise any other hot gas path, combustion or other turbine component that comprises one or more internal cavities 55.

The turbine component internal heating system 10 generally comprises at least one turbine component support platform 20 and at least one heat source 30 that extends from the turbine component support platform 20. The turbine component support platform 20 is any platform (e.g., structure) that supports a turbine component 50 by at least temporarily engaging at least one side wall 51, 52 of the turbine component 50.

As used herein, "temporarily engaging" (and variants thereof) refers to any connection that allows the turbine component 50 to temporarily be disposed on and supported by the turbine component support platform 20 during heating and potentially coating operations as will become appreciated herein. For example, the turbine component support platform 20 may comprise a molded surface that inversely matches the respective side wall 51, 52 of the turbine component 50 such that the two components mate when brought together. In even some embodiments, the turbine component support platform 20 may comprise one or more specific support features 21 connected to a base 22. Such support features 21 may comprise any suitable device for supporting the turbine component 50 such as latches, clamps, arms, levers, walls or the like.

For example, as specifically illustrated in FIG. 1, the turbine component support platform 20 may comprise a platform that engages the outer side wall 52 (also referred to as the lower platform) of the turbine component 50. Such embodiments can comprise a molded platform that inversely matches outer side wall 52 of the turbine component 50.

Alternatively, as specifically illustrated in FIG. 2, the turbine component support platform 20 may comprise a platform that engages the inner side wall 51 (also referred to as the upper platform) of the turbine component 50. Such embodiments can similarly comprise a molded platform that inversely matches inner side wall 51 of the turbine component 50.

In even some embodiments, the turbine component internal heating system 10 may comprise two or more turbine component support platforms 20. In such embodiments, one of the turbine component support platforms 20 may comprise a platform to engage the outer side wall 52 and another turbine component support platform 20 may comprise a platform to engage the inner side wall 51. In such embodiments, each of the turbine component support platforms 20 may comprise a heat source 30 extending therefrom such that the same or different internal cavities 55 of the turbine component 50 can be heated by the heat sources 30 extending from each of the turbine component support platforms 20. Such embodiments may provide for more heating profile options by disposing the heat sources 30 at a greater variety of locations as should be appreciated herein. Alternatively, multiple turbine component support platforms 20 may be used to support the same side wall 51 or 52 of the turbine component 50.

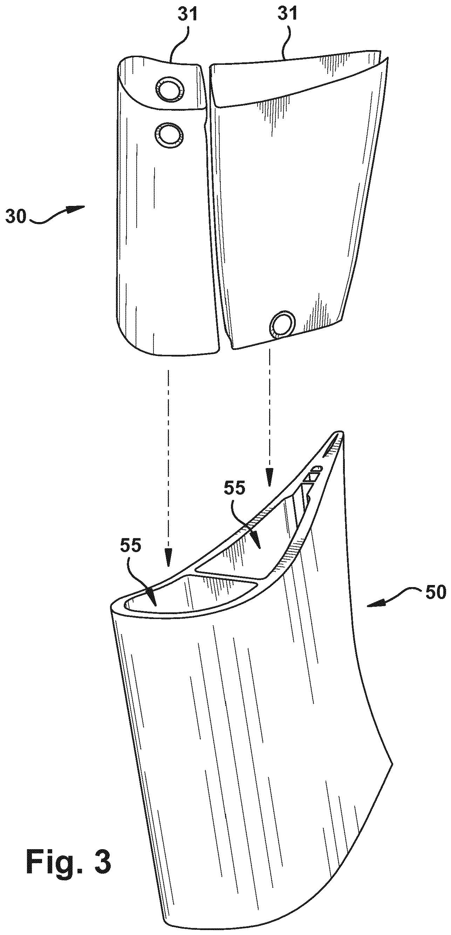

With additional reference to FIGS. 3-5, the turbine component internal heating system 10 further comprises at least one heat source 30 that extends from the turbine component support platform 20. The at least one heat source 30 is positioned with respect to the turbine component support platform 20 such that the at least one heat source 30 becomes at least partially disposed within at least one of the one or more internal cavities 55 when the turbine component 50 is supported on the turbine component support platform. The internal location of the at least one heat source 30 thereby provides a device for heating at least a part of the turbine component 50 from the inside.

For example, in some embodiments, the heat source 30 may comprise a conduction element 31 such as that illustrated in FIG. 3. The conduction element 31 may be shaped to fit within one of the one or more internal cavities 55 while contacting the turbine component 50 itself and connected to a power supply that allows it to transfer heat via conduction. In some embodiments, the conduction element 31 may thereby provide a more uniform heat distribution to the turbine component 50 as a result of its solid interface within the internal cavity 55.

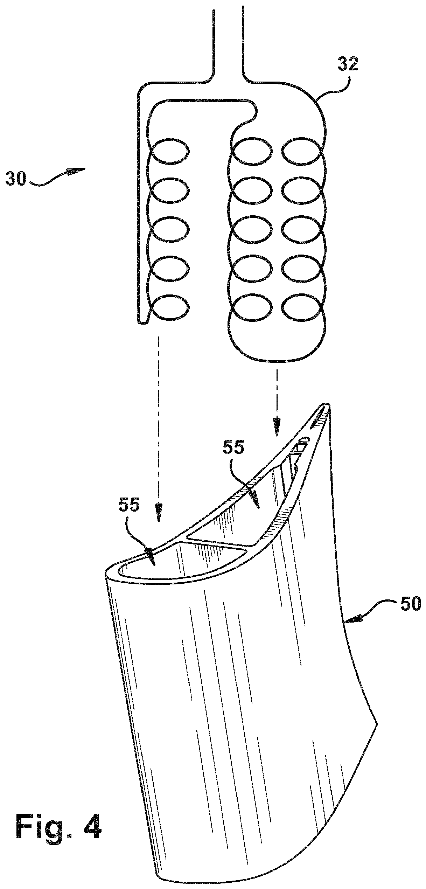

In some embodiments, the heat source 30 may comprise an induction coil 32 such as that illustrated in FIG. 4. The induction coil 32 may be shaped to fit within one of the one or more internal cavities 55 while connected to a power supply and comprise one or more coils, serpentine patterns or other alternating configurations to help increase heat distribution via induction. In some embodiments, the induction coil 32 may provide a more localized heat distribution to the turbine component 50 as a result of its selectively concentrated coiling.

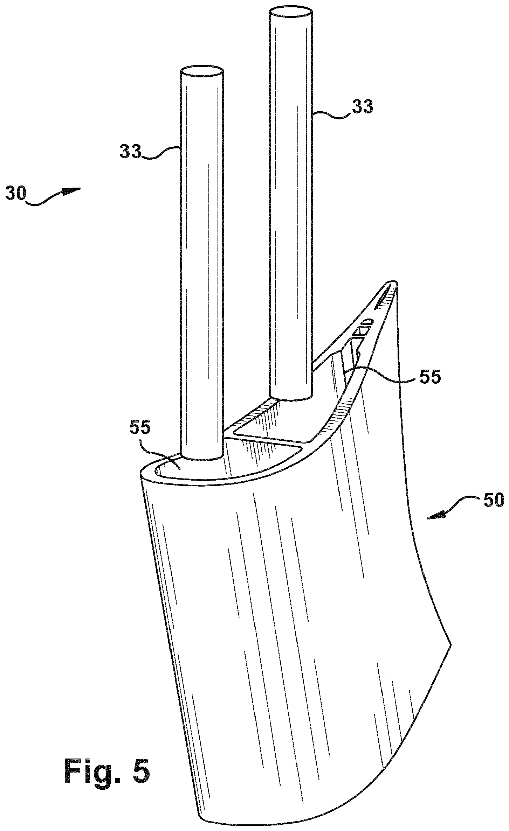

In even some embodiments, the heat source 30 may comprise a radiation rod 33 (e.g., calrod, pipes, etc.) such as that illustrated in FIG. 5. The radiation rod 33 may be shaped to fit within one of the one or more internal cavities 55 while connected to a power supply provide heat distribution via radiation. In some embodiments, the radiation rod may provide a more simplified approach to providing heat without having to provide as intricate of configurations as may be utilized with other heating alternatives.

In some embodiments, the heat source 30 may comprise a variety of types of heat sources (e.g., a combination of conduction elements 31, induction coils 32, and/or radiation rods 33). Furthermore, while specific heat mechanisms are disclosed herein, it should be appreciated that these are not intended to be limiting and other types of heat mechanisms may additionally or alternatively be utilized as the heat source 30 of the turbine component internal heating system 10.

A single heat source 30 may be disposed within a single internal cavity 55, a plurality of heat sources 30 may be disposed within a single internal cavity 55, or a plurality of heat sources 30 may be disposed within a plurality of internal cavities 55. In some embodiments, the heat source 30 may be concentrated in certain locations based on the profile of the turbine component 50. For example, the heat source 30 may be concentrated around thicker portions of the turbine component or where it is otherwise expected to require greater heat to facilitate coating on the target surface 59 of the turbine component 50.

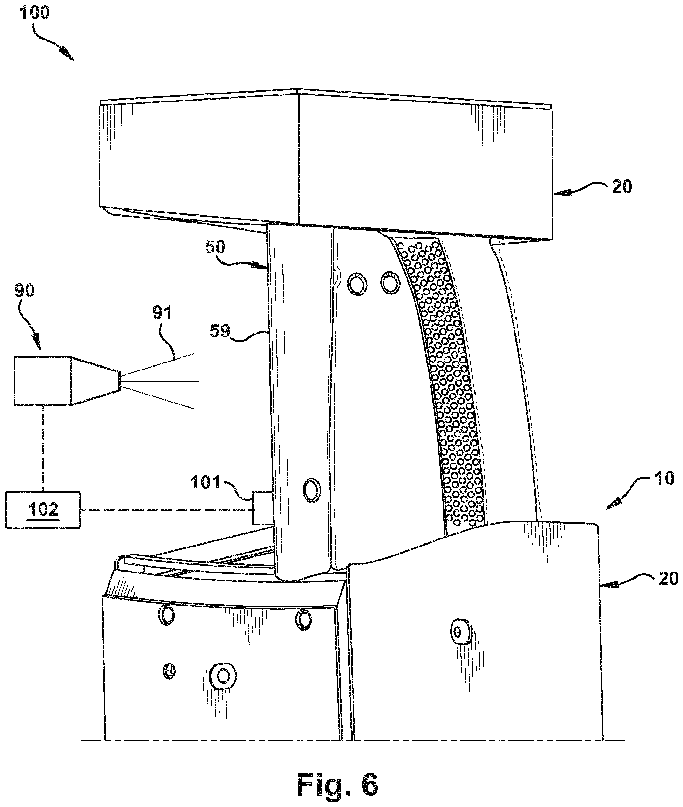

Referring now additionally to FIG. 6, the turbine component internal heating system 10 can combine with a coater 90 to form a turbine component coating system 100. The coater 90 can coat the target surface 59 of the turbine component 50 with a coating 91 while the turbine component 50 is supported by the turbine component support platform 20.

The coater 90 can comprise any device that coats a target surface 59 of the turbine component 50 with a coating 91. For example, in some embodiments, the coater 90 can comprise a thermal spray gun (e.g., HVOF, plasma, cold spray, etc.) or other device that projects coating material towards the target surface 59 (such as illustrated in FIG. 6). The coating 91 can thereby comprise any coating that may be disposed on the target surface 59 (e.g., exterior surface) of the turbine component 50 such as, for example, a bond coat, top coat, thermal barrier coating, or other suitable type of coating.

The coater 90 may be disposed at any position relative to the turbine component 50 that allows for coating the target surface 59. For example, the coater 90 may be disposed adjacent the turbine component 50 as it is supported by the turbine component support platform 20 of the turbine component internal heating system 10. In such embodiments, the coater 90 and/or the turbine component support platform 20 may be able to rotate, articulate or otherwise move with respect to the other to allow for coating of the target surface 59.

During operation of the turbine component coating system 100, the heat source 30 and the coater 90 may be utilized in any relative sequence. For example, in some embodiments, the heat source 30 may be utilized prior to coating to help ensure the turbine component 50 is sufficiently heated to achieve proper coating deposition. In such embodiments, the heat source 30 may even be used during and/or after the coating operation. Moreover, the heat source 30 may be ramped, cycled or held at a variety of temperatures as needed.

Still referring to FIG. 6, the turbine component coating system 100 may further comprise one or more additional accessories to assist in the coating operation. For example, in some embodiments, the turbine component coating system 100 may comprise one or more thermocouples 101 that monitor the temperature at one or more locations of the turbine component 50. In such embodiments, the coater 90 and/or the heat source 30 may even automatically adjust their respective settings based at least in part on feedback from the one or more thermocouples 101 (such as via a common digital controller). In other embodiments, an operator may monitor the thermocouples 101 readings and adjust the coater 90 and/or the heat source 30 manually.

Alternatively or additionally, the turbine component coating system 100 may further comprise one or more IR cameras 102 that monitor the coating at one or more locations during deposition. In such embodiments, the coater 90 and/or the heat source 30 may even automatically adjust their respective settings based at least in part on feedback from the one or more IR cameras 102 (such as via a common digital controller). In other embodiments, an operator may monitor the feeds from the IR cameras 102 and adjust the coater 90 and/or heat source 30 manually.

While specific accessories have been presented herein, these accessories are exemplary only and not intended to be exhausting. It should be appreciated that additional or alternative accessories may further be included in the turbine component coating system 100 for internally heating the turbine component 50 and coating a target surface 59.

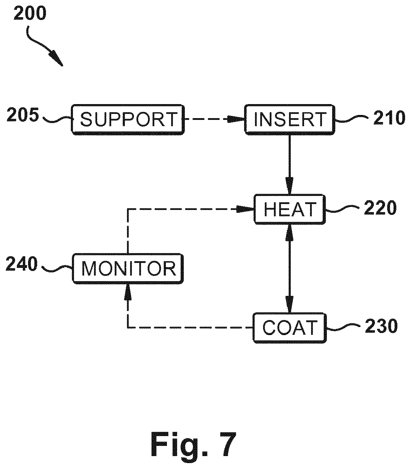

With additional reference now FIG. 7, a method 200 is illustrated for coating a target surface 59 of a turbine component 50 comprising one or more internal cavities 55. The method 200 at least first comprises inserting at least one heat source 30 into at least one of the one or more internal cavities 55 in step 210. As discussed above, the heat source 30 can comprise a variety of various elements (e.g., conduction, induction, radiation) and be inserted in a variety of configurations (e.g., inserted from one or both side walls 51, 52 of the turbine component). In some embodiments, the heat source 30 may extend from a turbine component support platform 20 such that the method 200 can additionally comprise supporting the turbine component 50 in step 205 in conjunction with inserting the at least one heat source 30 in step 210. As also discussed above, supporting the turbine component 50 in step 220 can comprise a single turbine component support platform 20 or a plurality of turbine component support platforms 20 positioned at one or both side walls 51, 52.

The method 200 further comprises heating the target surface 59 via the at least one heat source 30 while it is inserted into the at least one of the one or more internal cavities 55 in step 220. As discussed above, heating in step 220 can occur in a variety timing sequences such as various ramp rates, iterations, hold periods or the like.

Finally, the method 200 further comprises coating the target surface 59 in step 230. As discussed above, coating the target surface 59 in step 230 can be accomplished through a variety of coating mechanisms for a variety of different types of coatings. Moreover, heating in step 220 and coating in step 230 may occur in any relative timing such that the target surface 59 (and the rest of the turbine component) is sufficiently heated for the coating application.

In even some embodiments, the method 200 may further comprise monitoring at least one of the heating and coating of the target surface in step 240 using one or more accessories. As discussed above, the accessories used for monitoring in step 240 may include, for example, thermocouples 101, IR cameras 102 or any other suitable device for monitoring the temperature profile of the turbine component 50 (such as the target surface 59 itself) and/or the deposited coating 91. Such monitoring may thereby be utilized to adjust the heating in step 220 and/or the coating in step 230.

It should now be appreciated that turbine component internal heating systems, turbine component coating systems and methods for using the same allow for the internal heating of turbine components before, during and/or after coating a target surface (e.g., exterior surface). Such internal heating may provide for the proper parameters for coating while limiting or avoiding other more excessive, timely and/or costly heating operations.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A turbine component internal heating system (10) comprising:
at least one turbine component support platform (20) that supports a turbine component (50) having one or more internal cavities (55) by temporarily engaging at least a side wall (51) for the turbine component (50); and,
at least one heat source (30) that extends from the at least one turbine component support platform (20), wherein when the at least one turbine component support platform (20) supports the turbine component (50), the at least one heat source (30) is at least partially disposed within at least one of the one or more internal cavities (55) such that it can heat the turbine component (50) from the inside.

2. The turbine component internal heating system (10) of claim 1, further comprising:
at least a second turbine component platform (20) that supports the turbine component by temporarily engaging at least a second side wall (52) for the turbine component (50).

3. The turbine component internal heating system (10) of claim 2, further comprising:
at least one second heat source (30) that extends from the at least one second turbine component support platform (20), wherein when the at least one second turbine component support platform (20) supports the turbine component (50), the at least one second heat source (30) is at least partially disposed within at least one of the one or more internal cavities (55) such that it can heat the turbine component (50) from the inside.

4. The turbine component internal heating system of any of claims 1 to 3, wherein the heat source (30) comprises one of a conduction element (31), an induction coil (32) or a radiation rod (33).

5. The turbine component internal heating system of any preceding claim, wherein the turbine component (50) comprises a nozzle or bucket.

6. A turbine component coating system (100) comprising:
a turbine component internal heating system (10) as recited in any of claims 1 to 5; and
a coater (90) that coats a target surface (59) of the turbine component (50) with a coating (91) while the turbine (50) component is supported by the turbine component support platform (20).

7. The turbine component coating system of claim 6, wherein the coating (91) comprises a bond coat, top coat or thermal barrier coating.

8. The turbine component coating system of claim 6 or 7, further comprising one or more thermocouples (102) that monitor a temperature at one or more locations of the turbine component (50).

9. The turbine component coating system of any of claims 6 to 8, further comprising one or more IR cameras (102) that monitor the coating (91) deposited on the target surface (59).

10. A method (200) for coating a target surface of a turbine component (50) comprising one or more internal cavities (55), the method comprising:
inserting (210) at least one heat source (30) into at least one of the one or more internal cavities (55)
heating (220) the target surface (59) via the at least one heat source (30) while it is inserted into the at least one of the one or more internal cavities (55); and,
coating (230) the target surface (59).

11. The method of claim 10, further comprising supporting the turbine component (50) on the turbine component support platform (20) while the at least one heat source (30) is inserted into the at least one of the one or more internal cavities (55).

12. The method of claim 11, wherein the at least one heat source (30) extends from the at least one turbine component support platform (20).

13. The method of any of claims 10 to 12, wherein heating the target surface at least partially occurs prior to coating the target surface (59) or while coating the target surface (59).

14. The method of any of claims 10 to 13, further comprising monitoring (240) at least one of the heating or coating of the turbine component (50) via one or more accessories.

15. The method of any of claims 10 to 14, wherein the heat sources (30) comprises one of a conduction element (31), induction coil (32) or radiation rod (33).

## Patentansprüche

1. Inneres Heizsystem (10) für Turbinenkomponenten, das Folgendes umfasst:
mindestens eine Turbinenkomponententrägerplattform (20), die eine Turbinenkomponente (50), die einen oder mehrere innere Hohlräume (55) aufweist, trägt, indem sie zeitweilig zumindest in eine Seitenwand (51) für die Turbinenkomponente (50) eingreift; und
mindestens eine Wärmequelle (30), die sich von der mindestens einen Turbinenkomponententrägerplattform (20) erstreckt, wobei die mindestens eine Wärmequelle (30) zumindest teilweise in mindestens einem des einen oder der mehreren Hohlräume (55) angeordnet ist, so dass sie die Turbinenkomponente (50) von innen heizen kann, wenn die mindestens eine Turbinenkomponententrägerplattform (20) die Turbinenkomponente (50) trägt.

2. Inneres Heizsystem (10) für Turbinenkomponenten nach Anspruch 1, das ferner Folgendes umfasst:
mindestens eine zweite Turbinenkomponententrägerplattform (20), die die Turbinenkomponente trägt, indem sie vorübergehend zumindest in eine zweite Seitenwand (52) für die Turbinenkomponente (50) eingreift.

3. Inneres Heizsystem (10) für Turbinenkomponenten nach Anspruch 2, das ferner Folgendes umfasst:
mindestens eine zweite Wärmequelle (30), die sich von der mindestens einen zweiten Turbinenkomponententrägerplattform (20) erstreckt, wobei die mindestens eine zweite Wärmequelle (30) zumindest teilweise in mindestens einem des einen oder der mehreren Hohlräume (55) angeordnet ist, so dass sie die Turbinenkomponente (50) von innen heizen kann, wenn die mindestens eine zweite Turbinenkomponententrägerplattform (20) die Turbinenkomponente (50) trägt.

4. Inneres Heizsystem für Turbinenkomponenten nach einem der Ansprüche 1 bis 3, wobei die Wärmequelle (30) ein Leitungselement (31), eine Induktionsspule (32) oder einen Strahlungsstab (33) umfasst.

5. Inneres Heizsystem für Turbinenkomponenten nach einem der vorhergehenden Ansprüche, wobei die Turbinenkomponente (50) eine Düse oder eine Schaufel umfasst.

6. Turbinenkomponentenbeschichtungssystem (100), das Folgendes umfasst:
ein inneres Heizsystem (10) für Turbinenkomponenten nach einem der vorhergehenden Ansprüche 1 bis 5; und
einen Beschichter (90), der eine Zieloberfläche (59) der Turbinenkomponente (50) mit einer Beschichtung (91) beschichtet, während die Turbinenkomponente (50) von der Turbinenkomponententrägerplattform (20) getragen wird.

7. Turbinenkomponentenbeschichtungssystem nach Anspruch 6, wobei die Beschichtung (91) eine Verbindungsschicht, eine Deckschicht oder eine Wärmedämmschicht umfasst.

8. Turbinenkomponentenbeschichtungssystem nach Anspruch 6 oder 8, das ferner ein oder mehrere Thermoelemente (102) umfasst, die an einer oder mehreren Positionen der Turbinenkomponente (50) eine Temperatur überwachen.

9. Turbinenkomponentenbeschichtungssystem nach einem der Ansprüche 6 bis 8, das ferner eine oder mehrere IR-Kameras (102) umfasst, die die auf der Zieloberfläche (59) abgelagerte Beschichtung (91) überwachen.

10. Verfahren (200) zum Beschichten einer Zieloberfläche einer Turbinenkomponente (50), die einen oder mehrere innere Hohlräume (55) umfasst, wobei das Verfahren Folgendes umfasst:
Einführen (210) mindestens einer Wärmequelle (30) in mindestens einen des einen oder der mehreren inneren Hohlräume (55);
Heizen (220) der Zieloberfläche (59) über die mindestens eine Wärmequelle (30), während diese in den mindestens einen des einen oder der mehreren inneren Hohlräume (55) eingeführt ist; und
Beschichten (230) der Zieloberfläche (59).

11. Verfahren nach Anspruch 10, das ferner das Tragen der Turbinenkomponente (50) auf der Turbinenkomponententrägerplattform (20) umfasst, während die mindestens eine Wärmequelle (30) in den mindestens einen des einen oder der mehreren inneren Hohlräume (55) eingeführt ist.

12. Verfahren nach Anspruch 11, wobei sich die mindestens eine Wärmequelle (30) von der mindestens einen Turbinenkomponententrägerplattform (20) erstreckt.

13. Verfahren nach einem der Ansprüche 10 bis 12, wobei das Heizen der Zielfläche zumindest teilweise vor dem Beschichten der Zielfläche (59) oder während des Beschichtens der Zielfläche (59) geschieht.

14. Verfahren nach einem der Ansprüche 10 bis 13, das ferner das Überwachen (240) des Heizens und/oder des Beschichtens der Turbinenkomponente (50) über ein oder mehrere Zubehörteile umfasst.

15. Verfahren nach einem der Ansprüche 10 bis 14, wobei die Wärmequelle (30) ein Leitungselement (31), eine Induktionsspule (32) oder einen Strahlungsstab (33) umfasst.

## Revendications

1. Système de chauffage interne de composant de turbine (10) comprenant :
au moins une plate-forme de support de composant de turbine (20) qui supporte un composant de turbine (50) ayant une ou plusieurs cavités internes (55) en engageant temporairement au moins une paroi latérale (51) pour le composant de turbine (50) ; et
au moins une source de chaleur (30) qui s'étend depuis l'au moins une plate-forme de support de composant de turbine (20), dans lequel quand l'au moins une plate-forme de support de composant de turbine (20) supporte le composant de turbine (50), l'au moins une source de chaleur (30) est au moins partiellement disposée à l'intérieur de la ou d'au moins une des cavités internes (55) de telle sorte qu'elle peut chauffer le composant de turbine (50) depuis l'intérieur.

2. Système de chauffage interne de composant de turbine (10) de la revendication 1, comprenant en outre :
au moins une deuxième plate-forme de composant de turbine (20) qui supporte le composant de turbine en engageant temporairement au moins une deuxième paroi latérale (52) pour le composant de turbine (50).

3. Système de chauffage interne de composant de turbine (10) de la revendication 2, comprenant en outre :
au moins une deuxième source de chaleur (30) qui s'étend depuis l'au moins une deuxième plate-forme de support de composant de turbine (20), dans lequel quand l'au moins une deuxième plate-forme de support de composant de turbine (20) supporte le composant de turbine (50), l'au moins une deuxième source de chaleur (30) est au moins partiellement disposée à l'intérieur de la ou d'au moins une des cavités internes (55) de telle sorte qu'elle peut chauffer le composant de turbine (50) depuis l'intérieur.

4. Système de chauffage interne de composant de turbine de l'une quelconque des revendications 1 à 3, dans lequel la source de chaleur (30) comprend un élément de conduction (31), ou une bobine d'induction (32), ou une tige rayonnante (33).

5. Système de chauffage interne de composant de turbine d'une quelconque revendication précédente, dans lequel le composant de turbine (50) comprend une ailette ou une aube.

6. Système de revêtement de composant de turbine (100) comprenant :
un système de chauffage interne de composant de turbine (10) selon l'une quelconque des revendications 1 à 5 ; et
un dispositif de revêtement (90) qui recouvre une surface cible (59) du composant de turbine (50) avec un revêtement (91) pendant que le composant de turbine (50) est supporté par la plate-forme de support de composant de turbine (20).

7. Système de revêtement de composant de turbine de la revendication 6, dans lequel le revêtement (91) comprend une couche d'accrochage, une couche de finition ou un revêtement de barrière thermique.

8. Système de revêtement de composant de turbine de la revendication 6 ou 7, comprenant en outre un ou plusieurs thermocouples (102) qui surveillent une température à un ou plusieurs endroits du composant de turbine (50).

9. Système de revêtement de composant de turbine de l'une quelconque des revendications 6 à 8, comprenant en outre une ou plusieurs caméras IR (102) qui surveillent le revêtement (91) déposé sur la surface cible (59).

10. Procédé (200) de revêtement d'une surface cible d'un composant de turbine (50) comprenant une ou plusieurs cavités internes (55), le procédé comprenant :
l'insertion (210) d'au moins une source de chaleur (30) dans la ou au moins une des cavités internes (55) ;
le chauffage (220) de la surface cible (59) par le biais de l'au moins une source de chaleur (30) pendant qu'elle est insérée dans la ou au moins une des cavités internes (55) ; et
le revêtement (230) de la surface cible (59).

11. Procédé de la revendication 10, comprenant en outre le support du composant de turbine (50) sur la plate-forme de support de composant de turbine (20) pendant que l'au moins une source de chaleur (30) est insérée dans la ou au moins une des cavités internes (55).

12. Procédé de la revendication 11, dans lequel l'au moins une source de chaleur (30) s'étend depuis l'au moins une plate-forme de support de composant de turbine (20).

13. Procédé de l'une quelconque des revendications 10 à 12, dans lequel le chauffage de la surface cible se produit au moins partiellement avant le revêtement de la surface cible (59) ou pendant le revêtement de la surface cible (59).

14. Procédé de l'une quelconque des revendications 10 à 13, comprenant en outre la surveillance (240) du chauffage et/ou du revêtement du composant de turbine (50) par le biais d'un ou plusieurs accessoires.

15. Procédé de l'une quelconque des revendications 10 à 14, dans lequel la source de chaleur (30) comprend un élément de conduction (31), ou une bobine d'induction (32), ou une tige rayonnante (33).
